# EUROPEAN PATENT SPECIFICATION

(11) **EP 3 029 104 B1**
(45) Date of publication and mention of the grant of the patent: **11.04.2018**
(21) Application number: 14831968.4
(22) Date of filing: 30.07.2014
(51) Int. Cl.: C08L 23/26, B60C 5/14, C08L 29/04, C08L 77/00, F16L 11/04

(54) **THERMOPLASTIC RESIN COMPOSITION, AND TIRE AND HOSE USING SAME**
THERMOPLASTISCHE HARZZUSAMMENSETZUNG UND REIFEN SOWIE SCHLAUCH DAMIT
COMPOSITION DE RÉSINE THERMOPLASTIQUE ET PNEU ET TUYAU SOUPLE L'UTILISANT

(30) Priority: 31.07.2013 JP 2013159260
(43) Date of publication of application: 08.06.2016
(73) Proprietor: The Yokohama Rubber Co., Ltd., Minato-ku Tokyo 105-8685 (JP)
(72) Inventor: SATO, Shun, Hiratsuka-shi Kanagawa 254-8601 (JP)
(74) Representative: Hoffmann Eitle
(86) International application number: PCT/JP2014/070082
(87) International publication number: WO 2015/016266

(56) References cited:
- EP-A1- 2 594 399
- WO-A1-2007/037541
- JP-A- 2009 523 081
- JP-A- 2012 020 509
- JP-A- 2012 046 652
- JP-A- 2012 057 127

## Description

### Technical Field

The present invention relates to a thermoplastic resin composition, and more particularly, a thermoplastic resin composition comprising a high proportion of an acid-modified elastomer in a thermoplastic resin matrix comprising a polyamide resin and an ethylene-vinyl alcohol copolymer and having a reduced decrease in gas barrier properties when it is subjected to heat treatment.

### Background Art

Thermoplastic resin compositions comprising a rubber dispersed in a polyamide resin as a thermoplastic resin have both gas barrier properties and flexibility. In addition to polyamide resins, thermoplastic resin compositions comprising as a thermoplastic resin ethylene-vinyl alcohol copolymer (EVOH) which is known to have excellent gas barrier properties are useful as, for example, a film member of pneumatic tire such as, for example, an inner liner, in the production of a pneumatic tire and are also useful in the production of a hose. As such a thermoplastic resin composition, Patent Literature 1, for example, describes that a thermoplastic resin composition capable of maintaining the flowability and thereby capable of being formed into a film, and having excellent low-temperature durability, even if a modified rubber having an acid anhydride group, epoxy group, carboxyl group or derivative thereof is added at a high ratio, is provided by using a modified polyamide resin obtained by preliminary melt-blending a polyamide resin with 0.05 to 5 parts by weight of a compound capable of bonding with an end amino group of the polyamide resin. Patent Literature 2 describes a thermoplastic resin composition in which a modified rubber having an acid anhydride group or epoxy group is dispersed in a polyamide resin and EVOH, the thermoplastic resin composition having a reduced rate of change in gas permeability due to fatigue by setting the blending ratio of the polyamide resin and EVOH to 47/53 to 61/39. Patent Literature 3 describes an EVOH-based composite resin comprising EVOH and an elastomer, and describes that the content of the elastomer in the EVOH-based composite resin is from 10 to 45 wt%.

### Citation List

### Patent Documents

Patent Document 1: Japanese Unexamined Patent Publication No. 2010-132850
Patent Document 2: Japanese Unexamined Patent Publication No. 2012-46622
Patent Document 3: Japanese Unexamined Patent Publication No. 2007-9171

### Summary of Invention

### Technical Problem

However, conventional thermoplastic resin compositions comprising a matrix phase (sea phase) comprising a polyamide resin and EVOH and a dispersed phase (island phase) comprising an acid-modified elastomer dispersed in the matrix phase have a problem in that, if they are heat treated at or above the melting point of EVOH in the form of stretched film when they comprise an acid-modified elastomer at a relatively high content in order to improve fatigue durability, there is a tendency for the morphology of the sea-island structure stretched during the formation of a film to vary, thereby forming paths of gas in the thickness direction of the film, and consequently resulting in a decrease in gas barrier properties.

### Solution to Problem

The present inventor has made intensive research with a view to solve the above problem, and as a result has found that heat resistance can be improved while maintaining good molding processability by increasing the proportion of the polyamide resin in the thermoplastic resin which constitutes a matrix phase (sea phase) and constructing the polyamide resin from a specific amount of at least one polyamide resin having a melting point within a relatively high specific range and at least one polyamide resin having a melting point within a relatively low specific range. The thermoplastic resin composition of the present invention can suppress the decrease in gas barrier properties even if it is heat treated.

According to the present invention, a thermoplastic resin composition comprising a matrix phase and a dispersed phase is provided, wherein
the matrix phase comprises:
(A1) at least one polyamide resin having a melting point of from 170 to 210°C,
(A2) at least one polyamide resin having a melting point of from 210 to 265°C, and
(B) at least one ethylene-vinyl alcohol copolymer,
the dispersed phase comprises (C) at least one acid-modified elastomer,
the amount of acid-modified elastomer (C) is from 100 to 240 parts by weight with respect to 100 parts by weight of the total amount of polyamide resins (A1) and (A2) and ethylene-vinyl alcohol copolymer (B),
the amount of polyamide resin (A2) is from 20 to 40 wt% based on the total weight of polyamide resins (A1), polyamide resin (A2) and ethylene-vinyl alcohol copolymer (B), and
the total amount of polyamide resin (A1) and polyamide resin (A2) is from 35 to 70 wt% based on the total weight of polyamide resins (A1), polyamide resin (A2) and ethylene-vinyl alcohol copolymer (B).

The amount of polyamide resin (A2) having a relatively high melting point (a melting point of from 210 to 265°C) is from 20 to 40 wt% based on the total weight of polyamide resin (A1), polyamide resin (A2) and ethylene-vinyl alcohol copolymer (B), and the total weight of polyamide resins (A1) and (A2) is from 35 to 70 wt% based on the total weight of polyamide resin (A1), polyamide resin (A2) and ethylene-vinyl alcohol copolymer (B), thereby maintaining the processability in forming such as film forming, and even if the thermoplastic resin composition is heat treated, suppressing the decrease in gas barrier properties caused by being heated.

The thermoplastic resin composition according to the present invention exhibits other excellent properties such as good gas barrier properties, flexibility, etc., than the above excellent properties, and therefore is useful in various applications (for example, pneumatic tires, hoses (for example, gas or fluid transport hoses), ship fenders, rubber bags, fuel tanks, etc.) that require such properties. According to the present invention, various manufactured articles produced from the above thermoplastic resin composition, for example, manufactured articles such as a pneumatic tire in which a film made of the thermoplastic resin composition of the present invention is used in an inner liner, a hose in which a film made of the thermoplastic resin composition of the present invention is used in a gas barrier layer, etc., are also provided.

### Brief Description of the Drawings

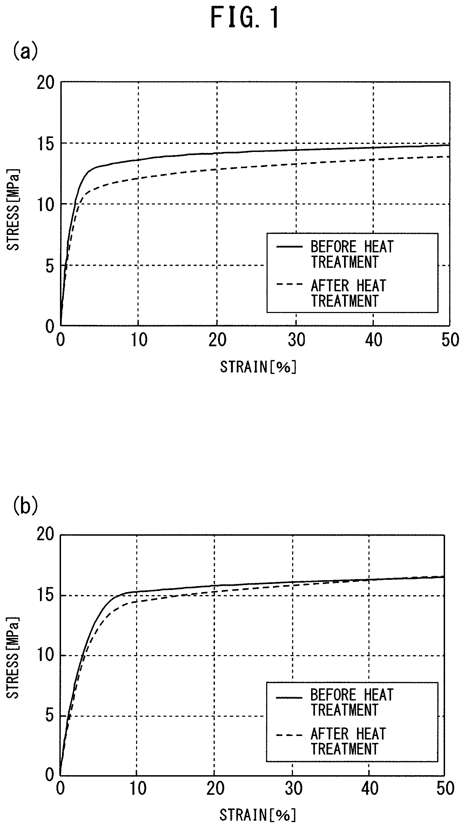

FIG. 1(a) shows a stress-strain curve before and after heat treatment for the thermoplastic resin composition of Comparative Example 1, and FIG. 1(b) shows a stress-strain curve before and after heat treatment for the thermoplastic resin composition of Example 1. pneumatic tire.

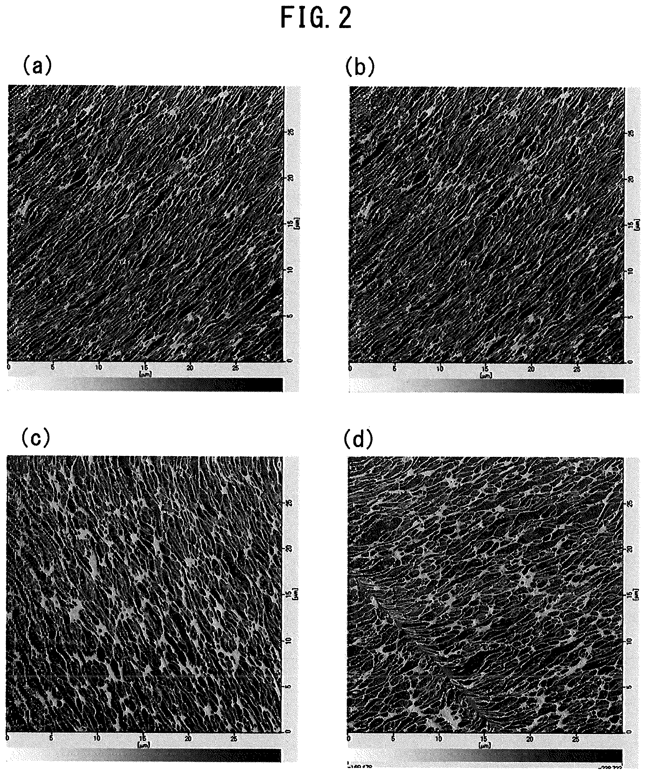

FIGS. 2(a) and (b) respectively show the observation results before and after heat treatment for a specimen prepared from the thermoplastic resin composition of Comparative Example 1, and FIGS. 2(c) and (d) respectively show the observation results before and after heat treatment for a specimen prepared from the thermoplastic resin composition of Example 1.

### Description of Embodiments

As described above, the thermoplastic resin composition of the present invention comprises a matrix phase and a dispersed phase, wherein the matrix phase comprises (A1) at least one polyamide resin having a melting point of from 170 to 210°C, (A2) at least one polyamide resin having a melting point of from 210 to 265°C, and (B) at least one ethylene-vinyl alcohol copolymer, and the dispersed phase comprises (C) at least one acid-modified elastomer.

Component (A1) is not particularly limited so long as it is a polyamide resin having a melting point of from 170 to 210°C, and a person with ordinary skill in the art can select a polyamide resin for component (A1) based on the melting point. Examples of the polyamide resin having a melting point of from 170 to 210°C include Nylon 11 (melting point 190°C), Nylon 12 (melting point 178°C), Nylon 6/66 (melting point 195°C), and Nylon 6/12 (melting point 197°C).

Component (A2) is not particularly limited so long as it is a polyamide resin having a melting point of from 210 to 265°C, and a person with ordinary skill in the art can select a polyamide resin for component (A2) based on the melting point. Examples of the polyamide resin having a melting point of from 210 to 265°C include Nylon 6/10 (melting point 216°C), Nylon 6 (melting point 225°C), Nylon 66 (melting point 260°C), and Nylon MXD6 (melting point 237°C).

Ethylene-vinyl alcohol copolymer (EVOH) for component (B) is a copolymer composed of ethylene units (-CH₂CH₂-) and vinyl alcohol units (-CH₂-CH(OH)-), and in addition to the ethylene units and the vinyl alcohol units, it may contain other constituent units to the extent that the effects of the present invention are not impaired. The EVOH for component (B) has an ethylene unit content, namely an ethylene content, of preferably 25 to 50 mol%. Too low an ethylene content of EVOH (B) will result in poor compatibility with the polyamide resins. Conversely, too high an ethylene content will result in the reduction in gas barrier properties. The EVOH is a saponified product of an ethylene-vinyl acetate copolymer, and the saponification degree thereof is preferably 90% or higher. Too low a saponification degree of the ethylene-vinyl alcohol copolymer will result in the reduction in air barrier properties and thermal stability. Ethylene-vinyl alcohol copolymers are commercially available, and are available under, for example, the trade name of Soarnol™ from The Nippon Synthetic Chemical Industry Co., Ltd. and under the trade name of Eval™ from Kuraray Co., Ltd. Examples of ethylene-vinyl alcohol copolymers having an ethylene content of 25 to 50 mol% include Soarnol™ H4815B (ethylene content of 48 mol%), Soarnol™ A4412B (ethylene content of 42 mol%), Soarnol™ DC3212B (ethylene unit content of 32 mol%), and Soarnol™ V2504RB (ethylene content of 25 mol%) from The Nippon Synthetic Chemical Industry Co., Ltd., and Eval™ L171B (ethylene content of 27 mol%), Eval™ H171B (ethylene content of 38 mol%), and Eval™ E171B (ethylene content of 44 mol%) from Kuraray Co., Ltd. The EVOH has a melt viscosity of 500 Pa·s or less at a temperature of 250°C and a shear rate of 243 s⁻¹ as measured by capillary rheometer method. If the melt viscosity at a temperature of 250°C and a shear rate of 243 s⁻¹ as measured by capillary rheometer method exceeds 500 Pa·s, the matrix phase and dispersed phase tend to cause phase inversion, thereby leading a reduction in processability.

The weight ratio of the total of polyamide resin (A1) and polyamide resin (A2) to ethylene-vinyl alcohol copolymer (B) is preferably from 40:60 to 70:30. A total amount of polyamide resin (A1) and polyamide resin (A2) of less than this range will cause an increase in a rate of change in gas permeability, and a total amount of polyamide resin (A1) and polyamide resin (A2) exceeding this range will cause the reaction between the polyamide resins and acid-modified elastomer to occur excessively, thereby causing the generation of gel particles and a reduction in flowability. In the present invention, by using as polyamide resins two or more polyamide resins having different melting points of at least one a specific amount of at least one polyamide resin having a melting point within a relatively high specific range and at least one polyamide resin having a melting point within a relatively low specific range as described above, the heat resistance of the resulting thermoplastic resin composition is improved, and even if it is subjected to a heat treatment, a change in morphology of the sea-island structure can be suppressed. Accordingly, the thermoplastic resin composition of the present invention exhibits a suppressed decrease in gas barrier properties to even if it is subjected to a heat treatment during molding processing, and therefore is capable of providing excellent heat resistance while maintaining good molding processability.

In the thermoplastic resin composition of the present invention, the matrix phase may optionally comprise, in addition to components (A1), (A2) and (B) described above, a thermoplastic resin such as polyester-based resin, polynitrile-based resin, cellulosic resin, fluororesin, imide-based resin, etc., in so far as the object of the present invention is not impaired.

At least one acid-modified elastomer (C) which forms the dispersed phase has a carboxyl group or acid anhydride group, for example, maleic anhydride group, at a side chain and/or end of molecule. Acid-modified elastomer (C) exhibits compatibility with the matrix phase, and is capable of being dispersed in EVOH (A). Acid-modified elastomer (C) can be produced according to a well-known method. For example, acid-modified elastomer (C) can be produced by reacting an acid anhydride and a peroxide with a rubber. Preferred examples of acid-modified elastomer (C) include acid-modified ethylene-α-olefin copolymers and derivatives thereof (for example, ethylene-propylene copolymer, ethylene-butene copolymer, ethylene-octene copolymer, ethylene-hexene copolymer, ethylene-propylene-diene terpolymer, etc.), ethylene-unsaturated carboxylic acid copolymers and derivatives thereof (for example, ethylene-acrylic acid copolymer, ethylene-methacrylic acid copolymer, ethylene-methyl acrylate copolymer, ethylene-methyl methacrylate copolymer, etc.). One of the above acid-modified elastomers may be used, or two or more of the above acid-modified elastomers may be used in combination. Examples of commercially available acid-modified polyolefin elastomers include Tafmer® MH7010 (maleic anhydride-modified ethylene-butene copolymer) and Tafmer® MH7020 (maleic anhydride-modified ethylene-butene copolymer) manufactured by Mitsui Chemicals, Inc.

In the thermoplastic resin composition of the present invention, the amount of acid-modified elastomer (C) is 100 to 240 parts by weight, and preferably 120 to 200 parts by weight, with respect to 100 parts by weight of the total of polyamide resins (A1) and (A2) and ethylene-vinyl alcohol copolymer (B). Although the thermoplastic resin composition of the present invention comprises an acid-modified elastomer at a relatively high content in order to achieve high fatigue durability, if the amount of acid-modified elastomer (C) is too high, acid-modified polyolefin elastomer (C) forms a continuous phase, and accordingly the resulting composition is not thermoplastic, whereas if the amount of acid-modified elastomer (C) is too low, sufficient fatigue durability cannot be achieved.

The amount of polyamide resin (A2) is from 20 to 40 wt%, and preferably from 25 to 35 wt%, based on the total weight of polyamide resin (A1), polyamide resin (A2) and ethylene-vinyl alcohol copolymer (B). The more the amount of polyamide resin (A2) having a relatively high melting point, the less the rate of change in gas barrier properties due to heat treatment, and the more the proportion of the high melting point component in the compositions, and accordingly a higher kneading temperature is needed in the production of the thermoplastic resin composition. The higher the kneading temperature, the more the excessive reaction occurs between the acid-modified elastomer and polyamide resins, and consequently the thermoplastic resin composition is easily gelled. If the amount of polyamide resin (A2) is too low, it is difficult to suppress a change in morphology when the thermoplastic resin composition is subjected to a heat treatment.

The total amount of polyamide resin (A1) and polyamide resin (A2) is from 35 to 70 wt%, and preferably from 40 to 60 parts by weight, based on the total weight of polyamide resin (A1), polyamide resin (A2) and ethylene-vinyl alcohol copolymer (B). Too high a total amount of polyamide resins (A1) and polyamide resin (A2) with respect to the total weight of polyamide resin (A1) means that the amount of ethylene-vinyl alcohol copolymer (B) is too low, and accordingly it is difficult to achieve good gas barrier properties. On the other hand, too low a total amount of polyamide resin (A1) and polyamide resin (A2) means that EVOH is too much. EVOH generally has properties of hard and brittle due to the formation of intermolecular hydrogen bonds, and accordingly, if the amount of EVOH (A) is too much, gas barrier properties of the thermoplastic resin composition will be reduced due to fatigue caused by being subjected to repeated deformation such as bending deformation and tensile deformation.

The type and amount of crosslinking agent (E) which is used to dynamically crosslink acid-modified elastomer (C) can be appropriately selected by a person with ordinary skill in the art depending on the crosslinking conditions. Examples of crosslinking agent (E) include compounds having a functional group capable of crosslinking with the carboxyl group or acid anhydride group of acid-modified elastomer (C), for example, amine compounds, peroxide compounds, compounds having a hydroxyl group, etc., and among them polyfunctional amine compounds and highly hydrogen bonding compounds are preferred. Polyfunctional amine compounds include 3,3'-diaminodiphenylsulfone, 4,4'-diaminodiphenylsulfone, *N-*(1,3-dimethylbutyl)-*N*'-phenyl-*p*-phenylenediamine, *m-*phenylenediamine, 1,3-bis(3-aminophenoxy)benzene, etc., and among them 3,3'-diaminodiphenylsulfone and tris-(2-hydroxyethyl)isocyanurate are preferred in view of costs, safety, and improvement in low temperature durability. The amount of the crosslinking agent is typically 0.1 to 5 parts by weight, and more preferably 0.5 to 3 parts by weight, with respect to 100 parts by weight of acid-modified elastomer (C). Too low an amount of the crosslinking agent will result in the reduction in fatigue durability. Conversely, too much an amount of the crosslinking agent will cause scorching during kneading and processing or appearance defects, such as fisheye, after processing into a film, etc.

In addition to the above essential components, common ingredients for common resins and rubbers, such as fillers, reinforcing agents, processing aids, compatibilizers, stabilizers, antioxidants, anti-aging agents, etc., may optionally be added to improve properties such as reinforcing properties, processability, dispersibility, heat resistance, antioxidative properties, etc., insofar as the effects of the present invention are not impaired. The amounts of these ingredients may be conventional common amounts, unless contrary to the object of the present invention. Further, these ingredients may be preliminarily added to at least one of the above essential components, as necessary, unless contrary to the object of the present invention. Polyamide resin (A1) and/or polyamide resin (A2) may have an end amino group which is capped with an end-capping agent such a monofunctional epoxy compounds, isocyanate group-containing compounds, acid anhydride group-containing compounds, halogenated alkyl group-containing compounds, etc., as necessary, in order to suppress the reduction in flowability due to the addition of acid-modified elastomer in the production of the thermoplastic resin composition. In view of the reactivity with an end amino group of the polyamide resins, the end-capping agent includes, preferably monofunctional epoxy compounds, for example aliphatic hydrocarbons, alicyclic hydrocarbons and aromatic hydrocarbons having one epoxy group per molecule. Specific examples of the monofunctional epoxy compounds include ethylene oxide, epoxypropane, 1,2-epoxybutane, polyethylene glycol butyl glycidyl ether, 2-ethylhexyl glycidyl ether, phenyl glycidyl ether, p-sec-butylphenyl glycidyl ether, etc., and epoxy compounds having 3 to 20 carbon atoms, preferably from 3 to 13 carbon atoms, and having an ether and/or hydroxyl group are preferred in view of the compatibility of the polyamide resin. When the end amino groups of polyamide resin (A1) and/or polyamide resin (A2) are capped with an end-capping agent, the amount of the end-capping agent is more than 0.1 parts by weight and less than 5 parts by weight, and preferably from 1 to 3 parts by weight, with respect to 100 parts by weight of polyamide resin (A1) and/or polyamide resin (A2). Too low an amount of compound (D) capable of bonding to an end amino group of polyamide resin (B) will result in a small effect in improving flowability when acid-modified polyolefin elastomer (C) is added at a high ratio, and therefore is not preferred. Conversely, too much an amount of end-capping agent (D) will result in the reduction in the low temperature durability (repeated fatigue properties) of the polyamide resins, and therefore is not preferred.

The thermoplastic resin composition of the present invention can be produced by melt-kneading the above essential components and optional ingredients using a kneader which is commonly used in the production of a thermoplastic resin composition, such as kneader, Banbury mixer, single-screw kneading extruder, twin-screw kneading extruder, etc. Melt-kneading is preferably carried out using a twin-screw kneading extruder, in view of the high productivity thereof. Although melt-kneading conditions depend on the types and amounts of the essential components and optional ingredients used, the melt-kneading temperature should be higher than the melting point of polyamide resin (A1) having a lower melting point among the polyamide reins formulated into the thermoplastic resin composition, and the melt-kneading time is typically from about 2 to about 12 minutes, and preferably from about 3 to about 8 minutes.

After the production of the thermoplastic resin composition of the present invention, it may be extruded from a die attached to the outlet port of a twin-screw kneading extruder into a form of film, sheet, tube, etc., or may be extruded into a strand form, and pelletized with a resin pelletizer, and subsequently the resulting pellets are formed into a desired form, such as a form of film, sheet, tube, etc., depending on the application, using a common resin forming technique such as inflation forming, calendar forming, extrusion forming, etc.

A method for producing a pneumatic tire can be explained as an example of a method for producing a manufactured article having a film composed of the thermoplastic resin composition of the present invention. As a method for producing a pneumatic tire having a film composed of the thermoplastic resin composition of the present invention, any conventional method may be used. For example, the thermoplastic resin composition of the present invention is formed into a film having a predetermined width and thickness, and the resulting film is laminated onto a tire molding drum in cylindrical form. Then, members that are used in conventional tire members such as a carcass layer, a belt layer, a tread layer, etc., are sequentially laminated thereon, and the resulting green tire is removed from the drum. Then, the green tire is vulcanized in accordance with a conventional technique to produce a pneumatic tire having a layer (for example, as an inner liner) formed from the thermoplastic resin composition of the present invention.

Further, a method for producing a hose can be explained as an example of a method for producing a manufactured article having a film composed of the thermoplastic resin composition of the present invention. As a method for producing a hose having a film composed of the thermoplastic resin composition of the present invention, any conventional method may be used. For example, the thermoplastic resin composition of the present invention is extruded with an extruder on a mandrel having a releasing agent preliminary applied thereon in a crosshead extrusion manner to form an inner tube, subsequently reinforcing yarns or reinforcing steel wires are braided on the inner tube using a braiding machine to form a reinforcing layer, and then another thermoplastic resin composition is extruded on the reinforcing layer to form an outer tube. A layer of other thermoplastic resin and/or adhesive may be provided between the inner tube and reinforcing layer and between the reinforcing layer and outer tube, as necessary. Finally, the mandrel is withdrawn to obtain a hose having a fil composed of the thermoplastic resin composition of the present invention.

### Examples

The present invention will be further explained with reference to the following examples and comparative examples, and it should be understood that the scope of the present invention is not limited by these examples.

### <Comparative Examples 1 to 4 and Examples 1 to 8>

### Production of Thermoplastic Resin Compositions

A polyamide resin, an EVOH resin, an acid-modified elastomer and a crosslinking agent were introduced in a cylinder of a twin-screw kneading extruder (manufactured by The Japan Steel Works, Ltd.) with the formulation ratio (parts by weight) shown in Table 1, and were conveyed to a kneading zone set at a temperature of 230C and a retention time of about 2 to 8 minutes to melt-knead them, and the resulting melt-kneaded material was extruded from a die attached to an outlet port into a strand form. The resulting extrudate in the form of strand was pelletized with a resin pelletizer to obtain a thermoplastic resin composition in the form of pellets.

**Table 1. Formulations of Thermoplastic Resin Compositions (parts by weight)**

| | Com. Ex. 1 | Ex. 1 | Ex. 2 | Ex. 3 | Ex. 4 | Ex. 5 | Ex. 6 | Ex. 7 | Ex. 8 | Com. Ex. 2 | Com. Ex. 3 | Com. Ex. 4 |
|---|---|---|---|---|---|---|---|---|---|---|---|---|
| Polyamide resin 1⁽¹⁾ (m.p. 190°C) (Component A1) | 10 | 25 | 20 | 22.5 | - | - | - | 35 | 20 | 35 | 35 | - |
| Polyamide resin 2⁽²⁾ (m.p. 190°C) (Component A1) | - | - | - | - | 22.5 | 22.5 | 20 | - | - | - | - | - |
| Polyamide resin 3⁽³⁾ (m.p. 225°C) (Component A2) | 10 | 25 | 20 | 22.5 | 22.5 | 22.5 | 20 | 30 | - | - | 40 | 50 |
| Polyamide resin 4⁽⁴⁾ (m.p. 237°C) (Component A2) | - | - | - | - | - | - | - | - | 20 | - | - | - |
| EVOH resin 1⁽⁵⁾ (m.p. 158°C) (Component B) | 80 | 50 | 60 | 55 | 55 | 55 | - | 35 | 60 | 65 | 25 | 50 |
| EVOH resin 2⁽⁶⁾ (m.p. 183°C) (Component B) | - | - | - | - | - | - | 60 | - | - | - | - | - |
| Acid-modified elastomer 1⁽⁷⁾ (Component C) | 150 | 140 | 180 | 160 | 160 | 130 | 150 | 110 | 120 | 160 | 180 | 160 |
| Acid-modified elastomer 2⁽⁸⁾ (Component C) | - | - | - | - | - | 30 | - | - | - | - | - | - |
| Crosslinking agent⁽⁹⁾ | 2 | 2 | 2 | 2 | 2 | 2 | 2 | 2 | 2 | 2 | 3 | 2 |
| (A1+A2)/(A1+A2+B)x100 | 20.0 | 50.0 | 40.0 | 45.0 | 45.0 | 45.0 | 40.0 | 65.0 | 40.0 | 35.0 | 75.0 | 50.0 |
| A2/(A1+A2+B)x100 | 10.0 | 25.0 | 20.0 | 22.5 | 22.5 | 22.5 | 20.0 | 30.0 | 20.0 | 0 | 40.0 | 50.0 |

Footnote of Table 1:
(1): Nylon 6/66 (UBE Nylon 5023B manufactured by Ube Industries, Ltd.)
(2): Nylon 6/12 (UBE Nylon 7024B manufactured by Ube Industries, Ltd.)
(3): Nylon 6 (UBE Nylon 1013B manufactured by Ube Industries, Ltd.)
(4): MXD6 Nylon (S6001 manufactured by Mitsubishi Gas Chemical Company, Inc.)
(5): Ethylene-vinyl alcohol copolymer (Soarnol H4815B manufactured by The Nippon Synthetic Chemical Industries Co., Ltd., ethylene content 48 mol%)
(6): Ethylene-vinyl alcohol copolymer (Soarnol DC3212B manufactured by The Nippon Synthetic Chemical Industries Co., Ltd., ethylene content 32 mol%)
(7): Maleic anhydride-modified ethylene-butene copolymer (Tafmer® MH7020 manufactured by Mitsui Chemicals, Inc.)
(8): Maleic anhydride-modified ethylene-butene copolymer (Tafmer® MH7010 manufactured by Mitsui Chemicals, Inc.)
(9): Tris-(2-hydroxyethyl)isocyanurate (THEIC manufactured by Shikoku Chemicals Corporation)

Soarnol H4815B and Soarnol DC3212B that are ethylene-vinyl alcohol copolymers manufactured by The Nippon Synthetic Chemical Industries Co., Ltd., have a melt viscosity of 270 Pa·s and 440 Pa·s, respectively, as measured at a temperature of 250°C and a shear rate of 243 s⁻¹ using a capillograph manufactured by Toyo Seiki Kogyo Co., Ltd.

### Evaluation Methods and Results

### (1) Evaluation on Film-Forming Properties

The thermoplastic resin compositions of Comparative Examples 1 to 4 and Examples 1 to 8 produced as described above, in the form of pellets, were formed into a film having an average thickness of 0.1 mm using a 40 mm φ single-screw extruder having a 550 mm width T-die (manufactured by Pla Giken Co. Ltd.) under extrusion conditions of extrusion temperatures of C1/C2/C3/C4/die = 200/210/220/230/230°C, a cooling roll temperature of 50°C, and a taking-up speed of 3 m/min. In Comparative Example 3, the total amount of the polyamide resins, (A1)+(A2), in the total weight of the thermoplastic resin is too high, the acid-modified elastomer reacted with polyamide resins excessively to cause a reduction in flowability, and therefore could not be formed into a film. Further, Comparative Example 4 had a high formulation ratio of polyamide resin (A2) having a higher melting point and accordingly required a high melt-kneading temperature, causing excessive reaction of polyamide resins (A1) and (A2) with the acid-modified elastomer to lead a reduction in flowability, and therefore could not be formed into a film. The film-forming properties were evaluated by visually observing the surface condition of the resulting films and rating the observation results in accordance with the criteria as indicated below. The evaluation results will be shown in Table 2.
1: Gel particles having a diameter of 5 mm or less were not observed.
2: Three or less gel particles having a diameter of 5 mm or less were observed in a 40 cm x 40 cm film.
3: Could not be formed into a film.

**Table 2. Evaluation Results on Film-Forming Properties**

| | Com. Ex. 1 | Ex. 1 | Ex. 2 | Ex. 3 | Ex. 4 | Ex. 5 | Ex. 6 | Ex. 7 | Ex. 8 | Com. Ex. 2 | Com. Ex. 3 | Com. Ex. 4 |
|---|---|---|---|---|---|---|---|---|---|---|---|---|
| Film-forming properties | 1 | 2 | 1 | 2 | 2 | 2 | 2 | 2 | 2 | 1 | 3 | 3 |

### (2) Evaluation on Gas Barrier Properties

Samples having a size of 10 cm x 10 cm were cut out from films having an average thickness of 0.1 mm obtained from the thermoplastic resin composition of Comparative Examples 1 to 2 and Examples 1 to 8, as described in "(1) Evaluation on Film-Forming Properties" above. An air permeation coefficient of thermoplastic resin composition film was determined for the resulting samples in accordance with JIS K7126-1, "Gas permeability test for plastic films and sheets (pressure difference method)". Next, each sample was heat treated by holding it between two iron plates, inserting them in a pressing machine, and pressing them at a temperature which is higher than the melting point by 10°C for 10 minutes. An air permeation coefficient of thermoplastic resin composition film was determined at a temperature of 55°C for the heat-treated samples. If the rate of change in air permeability coefficient (air permeability coefficient after heat treatment/air permeability coefficient before heat treatment) is 1.3 or less, it is regarded that the change in gas barrier properties due to heat treatment is small and the reduction in gas barrier properties against heat treatment is suppressed. The test results will be shown in Table 2 below. The air permeation coefficients before and after heat treatment are represented as an index taking the air permeation coefficient of the thermoplastic resin composition of Comparative Example 1 before heat treatment as 100.

**Table 3. Evaluation Results on Gas Barrier Properties**

| | Com. Ex. 1 | Ex. 1 | Ex. 2 | Ex. 3 | Ex. 4 | Ex. 5 | Ex. 6 | Ex. 7 | Ex. 8 | Com. Ex. 2 |
|---|---|---|---|---|---|---|---|---|---|---|
| Air permeation coefficient before heat treatment | 100 | 152 | 170 | 160 | 176 | 172 | 71 | 148 | 111 | 165 |
| Air permeation coefficient after heat treatment | 187 | 163 | 200 | 178 | 191 | 185 | 71 | 151 | 121 | 262 |
| Rate of change in air permeation coefficient | 1.87 | 1.07 | 1.18 | 1.11 | 1.09 | 1.08 | 1.09 | 1.02 | 1.09 | 1.59 |

### (3) Tensile Test

The films of the thermoplastic resin compositions of Comparative Example 1 and Example 1 obtained in the Evaluation on Film-Forming Properties described above were heat treated at a temperature of 160°C for 10 minutes. Three JIS No. 3 dumbbell-shaped specimens were prepared from a non-heat-treated film and a heat-treated film, respectively. Each specimen had a thickness of 0.1 mm and a tensile test was performed at a temperature of 25°C in accordance with JIS K6251 except for the thickness to obtain stress-strain curves. The tensile direction was perpendicular to the extrusion direction of the film. The regions where the strain is 50% or less in the resulting stress-strain curves are shown in FIGS. 1(a) and (b).

FIG. 1(a) shows the stress-strain curves for the non-heat-treated specimen and heat-treated specimen prepared from the thermoplastic resin composition of Comparative Example 1, and FIG. 1(b) shows the stress-strain curves for the non-heat-treated specimen and heat-treated specimen prepared from the thermoplastic resin composition of Example 1. It is thought that, in Comparative Example 1, the nylon proportion in the thermoplastic resin composition is low, causing the morphology stretched during the film-formation to change, and accordingly the heat-treated film exhibited a significant decrease in tensile stress as compared to the non-heat-treated film. It is thought that, in Example 1, the nylon proportion in the thermoplastic resin composition is high, and accordingly the morphology stretched during the film-formation is hard to change, and therefore there is no significant difference in tensile stress between the non-heat-treated film and the heat-treated film. According to the present invention, a thermoplastic resin composition having excellent heat resistance is provided, and the effects thereof are demonstrated in the stress-strain curves.

### (4) Morphology Observation

Each of the films of the thermoplastic resin compositions of Comparative Example 1 and Example 1 obtained in the Evaluation on Film-Forming Properties described above was cut into a desired size and a surface was generated by cutting it with a glass knife and generating a surface with a diamond cutter at a surface generating temperature of -110°C. The cross-sectional surface of the resulting specimen was observed at a temperature of 25°C using a scanning probe microscope (SPM) (SII Nanotechnology Inc.). The cross-sectional surface of the specimen is a cross-sectional surface generated by cutting the specimen in the direction perpendicular to the extrusion direction. The results are shown in FIGS. 2(a) to (d). FIGS. 2(a) and (b) respectively show the results on observation before and after heat treatment for the specimens prepared from the thermoplastic resin composition of Comparative Example 1, and FIGS. 2(c) and (d) respectively show the results on observation before and after heat treatment for the specimens prepared from the thermoplastic resin composition of Example 1. FIGS. 2 shows that, in the thermoplastic resin composition of Examples 1, the morphology of sea-island structure before heat treatment is almost maintained even if it is heat-treated, and the change in morphology of the sea-island structure due to heat treatment is small.

### Industrial Applicability

The thermoplastic resin composition of the present invention, which is processed into, for example, a form of film, can be suitably used as an inner liner for pneumatic tire, and a hose, and in addition to the pneumatic tire and hose, is also useful as a barrier material for rubber laminates such as ship fenders, rubber bags, fuel tanks, etc., that require gas barrier properties.

## Claims

1. A thermoplastic resin composition comprising a matrix phase and a dispersed phase, wherein
the matrix phase comprises:
(A1) at least one polyamide resin having a melting point of from 170 to 210°C,
(A2) at least one polyamide resin having a melting point of from 210 to 265°C, and
(B) at least one ethylene-vinyl alcohol copolymer,
the dispersed phase comprises (C) at least one acid-modified elastomer,
the amount of acid-modified elastomer (C) is from 100 to 240 parts by weight with respect to 100 parts by weight of the total amount of polyamide resins (A1) and (A2) and ethylene-vinyl alcohol copolymer (B),
the amount of polyamide resin (A2) is from 20 to 40 wt% based on the total weight of polyamide resin (A1), polyamide resin (A2) and ethylene-vinyl alcohol copolymer (B), and
the total amount of polyamide resin (A1) and polyamide resin (A2) is from 35 to 70 wt% based on the total weight of polyamide resins (A1), polyamide resin (A2) and ethylene-vinyl alcohol copolymer (B).

2. The thermoplastic resin composition according to claim 1, wherein ethylene-vinyl alcohol copolymer (B) has a melting point of 190°C or less.

3. The thermoplastic resin composition according to claim 1, wherein the weight ratio of the total of polyamide resin (A1) and polyamide resin (A2) to ethylene-vinyl alcohol copolymer (B) is from 40:60 to 70:30.

4. The thermoplastic resin composition according to any one of claims 1 to 3, wherein polyamide resin (A1) is at least one selected from the group consisting of Nylon 11, Nylon 12, Nylon 6/66, and Nylon 6/12.

5. The thermoplastic resin composition according to any one of claims 1 to 4, wherein polyamide resin (A2) is at least one selected from the group consisting of Nylon 6, Nylon 6/10, Nylon 66, and Nylon MXD6.

6. The thermoplastic resin composition according to any one of claims 1 to 5, wherein acid-modified elastomer (C) is at least one selected from the group consisting of acid-modified ethylene-α-olefin copolymers and derivatives thereof, and ethylene-unsaturated carboxylic acid copolymers and derivatives thereof.

7. The thermoplastic resin composition according to any one of claims 1 to 6, wherein ethylene-vinyl alcohol copolymer (B) has an ethylene content of from 25 to 50 mol% and a saponification degree of 90 % or higher.

8. The thermoplastic resin composition according to any one of claims 1 to 7, wherein ethylene-vinyl alcohol copolymer (B) has a melt viscosity of 500 Pa·s or less at a temperature of 250°C and a shear rate of 243 s⁻¹ as measured by capillary rheometer method.

9. The thermoplastic resin composition according to any one of claims 1 to 8, wherein acid-modified elastomer (C) is dynamically crosslinked with a crosslinking agent (D).

10. A pneumatic tire using a film made of the thermoplastic resin composition according to any one of claims 1 to 9 as an inner liner.

11. A hose using a film made of the thermoplastic resin composition according to any one of claims 1 to 9 as a gas barrier layer.

## Patentansprüche

1. Thermoplastische Harzzusammensetzung, umfassend eine Matrixphase und eine dispergierte Phase, wobei
die Matrixphase umfasst:
(A1) mindestens ein Polyamidharz mit einem Schmelzpunkt von 170 bis 210°C,
(A2) mindestens ein Polyamidharz mit einem Schmelzpunkt von 210 bis 265°C, und
(B) mindestens ein Ethylen-Vinylalkohol-Copolymer,
die dispergierte Phase mindestens ein säuremodifiziertes Elastomer (C) umfasst,
die Menge an säuremodifiziertem Elastomer (C) 100 bis 240 Gew.-Teile, bezogen auf 100 Gew.-Teile der Gesamtmenge von Polyamidharzen (A1) und (A2) und Ethylen-Vinylalkohol-Copolymer (B), beträgt;
die Menge an Polyamidharz (A2) 20 bis 40 Gew.-%, bezogen auf das Gesamtgewicht von Polyamidharz (A1), Polyamidharz (A2) und Ethylen-Vinylalkohol-Copolymer (B), beträgt, und
die Gesamtmenge an Polyamidharz (A1) und Polyamidharz (A2) 35 bis 70 Gew.-%, bezogen auf das Gesamtgewicht von Polyamidharzen (A1), Polyamidharz (A2) und Ethylen-Vinylalkohol-Copolymer (B), beträgt.

2. Thermoplastische Harzzusammensetzung gemäß Anspruch 1, wobei das Ethylen-Vinylalkohol-Copolymer (B) einen Schmelzpunkt von 190°C oder weniger aufweist.

3. Thermoplastische Harzzusammensetzung gemäß Anspruch 1, wobei das Gewichtsverhältnis von der Gesamtmenge von Polyamidharz (A1) und Polyamidharz (A2) zu Ethylen-Vinylalkohol-Copolymer (B) 40:60 bis 70:30 ist.

4. Thermoplastische Harzzusammensetzung gemäß einem der Ansprüche 1 bis 3, wobei das Polyamidharz (A1) mindestens ein Vertreter ist, der aus der Gruppe ausgewählt ist, die aus Nylon 11, Nylon 12, Nylon 6/66 und Nylon 6/12 besteht.

5. Thermoplastische Harzzusammensetzung gemäß einem der Ansprüche 1 bis 4, wobei das Polyamidharz (A2) mindestens ein Vertreter ist, der aus der Gruppe ausgewählt ist, die aus Nylon 6, Nylon 6/10, Nylon 66 und Nylon MXD6 besteht.

6. Thermoplastische Harzzusammensetzung gemäß einem der Ansprüche 1 bis 5, wobei das säuremodifizierte Elastomer (C) mindestens ein Vertreter ist, der aus der Gruppe ausgewählt ist, die aus säuremodifizierten Ethylen-α-Olefin-Copolymeren sowie Derivaten davon und Ethylenungesättigte Carbonsäure-Copolymeren sowie Derivaten davon besteht.

7. Thermoplastische Harzzusammensetzung gemäß einem der Ansprüche 1 bis 6, wobei das Ethylen-Vinylalkohol-Copolymer (B) einen Ethylengehalt von 25 bis 50 Mol-% und einen Verseifungsgrad von 90% oder höher aufweist.

8. Thermoplastische Harzzusammensetzung gemäß einem der Ansprüche 1 bis 7, wobei das Ethylen-Vinylalkohol-Copolymer (B) eine Schmelzviskosität von 500 Pa·s oder weniger bei einer Temperatur von 250°C und einer Scherrate von 243 s⁻¹, gemessen durch ein Kapillarrheometerverfahren, aufweist.

9. Thermoplastische Harzzusammensetzung gemäß einem der Ansprüche 1 bis 8, wobei das säuremodifizierte Elastomer (C) mit einem Vernetzungsmittel (D) dynamisch vernetzt ist.

10. Luftreifen, der einen Film aus der thermoplastischen Harzzusammensetzung gemäß einem der Ansprüche 1 bis 9 als innere Auskleidung verwendet.

11. Schlauch, der einen Film aus der thermoplastischen Harzzusammensetzung gemäß einem der Ansprüche 1 bis 9 als Gasbarriereschicht verwendet.

## Revendications

1. Composition de résine thermoplastique comprenant une phase matricielle et une phase dispersée, dans laquelle
la phase matricielle comprend :
(A1) au moins une résine polyamide ayant un point de fusion compris entre 170 et 210°C,
(A2) au moins une résine polyamide ayant un point de fusion compris entre 210 et 265°C, et
(B) au moins un copolymère éthylène-alcool vinylique,
la phase dispersée comprend (C) au moins un élastomère modifié par acide,
la quantité de l'élastomère modifié par acide (C) est comprise entre 100 et 240 parties en poids par rapport à 100 parties en poids de la quantité totale des résines polyamides (A1) et (A2) et du copolymère éthylène-alcool vinylique (B),
la quantité totale de la résine polyamide (A2) est comprise entre 20 et 40 % en poids sur la base du poids total de la résine polyamide (A1), de la résine polyamide (A2) et du copolymère éthylène-alcool vinylique (B), et
la quantité totale de la résine polyamide (A1) et de la résine polyamide (A2) est comprise entre 35 et 70 % en poids sur la base du poids total de la résine polyamide (A1), de la résine polyamide (A2) et du copolymère éthylène-alcool vinylique (B).

2. Composition de résine thermoplastique selon la revendication 1, dans laquelle le copolymère éthylène-alcool vinylique (B) a un point de fusion de 190°C ou moins.

3. Composition de résine thermoplastique selon la revendication 1, dans laquelle le rapport en poids du total de la résine polyamide (A1) et de la résine polyamide (A2) sur le copolymère éthylène-alcool vinylique (B) est compris entre 40:60 et 70:30.

4. Composition de résine thermoplastique selon l'une quelconque des revendications 1 à 3, dans laquelle la résine polyamide (A1) est au moins l'une sélectionnée parmi le groupe constitué du Nylon 11, du Nylon 12, du Nylon 6/66, et du Nylon 6/12.

5. Composition de résine thermoplastique selon l'une quelconque des revendications 1 à 4, dans laquelle la résine polyamide (A2) est au moins l'une sélectionnée parmi le groupe constitué du Nylon 6, du Nylon 6/10, du Nylon 66, et du Nylon MXD6.

6. Composition de résine thermoplastique selon l'une quelconque des revendications 1 à 5, dans laquelle l'élastomère modifié par acide (C) est au moins l'un sélectionné parmi le groupe constitué par les copolymères éthylène modifié par acide-α-oléfine et les dérivés de ceux-ci, et les copolymères éthylène-acide carboxylique insaturé et les dérivés de ceux-ci.

7. Composition de résine thermoplastique selon l'une quelconque des revendications 1 à 6, dans laquelle le copolymère éthylène-alcool vinylique (B) a une teneur en éthylène comprise entre 25 et 50 % en moles et un taux de saponification de 90 % ou plus.

8. Composition de résine thermoplastique selon l'une quelconque des revendications 1 à 7, dans laquelle le copolymère éthylène-alcool vinylique (B) a une viscosité à l'état fondu de 500 Pa.s ou moins à une température de 250°C et un taux de cisaillement de 243 s⁻¹ tel que mesuré par la méthode du rhéomètre capillaire.

9. Composition de résine thermoplastique selon l'une quelconque des revendications 1 à 8, dans laquelle l'élastomère modifié par acide (C) est dynamiquement réticulé avec un agent de réticulation (D).

10. Pneumatique utilisant un film constitué de la composition de résine thermoplastique définie selon l'une quelconque des revendications 1 à 9 en tant que revêtement interne.

11. Tuyau souple utilisant un film constitué de la composition de résine thermoplastique définie selon l'une quelconque des revendications 1 à 9 en tant que couche barrière aux gaz.
